# EUROPEAN PATENT APPLICATION

(11) **EP 1 158 727 A2**
(43) Date of publication of application: **28.11.2001**
(21) Application number: 01112008.6
(22) Date of filing: 23.05.2001
(51) Int. Cl.: H04L 12/56

(54) **Packet processor with real-time edit program construction engine**

(30) Priority: 24.05.2000 US 206617 P; 24.05.2000 US 206996 P; 24.07.2000 US 220335 P
(71) Applicant: Alcatel Internetworking (PE), Inc., Spokane, Washington 99206 (US)
(72) Inventor: Clear, David, San Jose, CA 95123 (US); Michels, Timothy S., Gilroy, CA 95020 (US); Davis, Greg W., Spokane, WA 99206 (US); Tallegas, Mathieu, Verdale, WA 99037 (US); Helbing, Mike, Spokane, WA 99206 (US)
(74) Representative: Dreiss, Fuhlendorf, Steimle & Becker

(57) **Abstract**

A switch includes one or more programmable packet switching controllers. The programmable packet switching controller has a real-time edit program construction engine. The edit program construction engine receives packet data, e.g., the header data, and disposition decisions generated by, for example, an application engine. The edit program construction engine uses the packet data and the disposition decisions to construct edit programs in real-time. The edit programs include a number of instructions for performing operations, such as COPY, DELETE, RECORD, PLAYBACK, INSERT and OVERWRITE, and are stored in an instruction RAM associated with an edit engine. The edit engine executes the instructions to modify inbound packets in order to transmit them as outbound packets.

## Description

### CROSS-REFERENCE TO RELATED APPLICATIONS

The present application claims the priority of U.S. Provisional Application No. 60/206,617 entitled "System and Method for Enhanced Line Cards" filed May 24, 2000, U.S. Provisional Application No. 60/206,996 entitled "Flow Resolution Logic System and Method" filed May 24, 2000 and U.S. Provisional Application No. 60/220,335 entitled "Programmable Packet Processor" filed July 24, 2000, the contents of all of which are fully incorporated by reference herein. The present application contains subject matter related to the subject matter disclosed in U.S. Patent Application (Attorney Docket No. 40029/JEJ/X2/134021) entitled "Programmable Packet Processor with Flow Resolution Logic" filed December 28, 2000, the contents of which are fully incorporated by reference herein.

### BACKGROUND OF THE INVENTION

Many conventional packet switching controllers rely on fixed, i.e. non-programmable, logic to make the lion's share of packet decisions. Programmable logic has been relied on, if at all, to make decisions for "exceptional" packets. Such "hardwired" controllers, which make fixed logic the bulwark of decision-making and relegate programmable logic to at most a collateral role, have generally supported relatively high forwarding speeds but also a severely limited feature set. Feature limitations have been imposed by the general requirement of including discrete fixed logic for each application the controller is expected to support. This general requirement of application-specific fixed logic has limited the number of applications the controller can support and has made it difficult to "field upgrade" the controller to add application support. Instead, new application support has typically required a hardware upgrade.

Due to the relative inflexibility of hardwired switching controllers, controllers reliant on programmable logic for routine packet decision-making (particularly controllers having multiple programmable processors) have been given more attention in recent years. Such multiprocessor controllers, sometimes called "network processors", can typically support a variety of applications and are typically more amenable to field upgrades due to their programmable nature.

Within the realm of network processors, there is still room for architectural improvement. In particular, a network processor that provides the high degree of flexibility normally associated with network processors without substantially sacrificing the high speed of conventional hardwired controllers is desired. For example, it is often desirable to be able to modify in field the edit programs used to modify inbound packets. This way, the edit programs can be customized for the inbound packets.

Therefore, it is desirable to provide a programmable network processor having an edit program construction engine that is capable of creating edit programs real-time.

### SUMMARY

In one embodiment of the present invention, an edit module is provided. The edit module includes an edit program construction engine. The edit program construction engine creates an edit program for a packet in response to a disposition decision for the packet. The edit program is applied to modify the packet.

In another embodiment of the present invention, a method of modifying an inbound packet to generate an outbound packet is provided. An edit program is created for the inbound packet in response to a disposition decision for the inbound packet, and the edit program is applied to the inbound packet to generate the outbound packet.

In yet another embodiment of the present invention, a packet switching controller for processing an inbound packet is provided. The packet switching controller includes a first engine for constructing an edit program for the inbound packet in response to a disposition decision for the inbound packet. The packet switching controller also includes a memory for storing the edit program and a second engine for executing the edit program to modify the inbound packet to generate an outbound packet.

In still another embodiment of the present invention, a method is provided for processing an inbound packet to generate an outbound packet using a real-time constructed edit program. The edit program is constructed for the inbound packet in response to a disposition decision for the inbound packet. The edit program is stored in a memory, and the inbound packet is modified by executing the edit program to generate the outbound packet.

In further embodiment of the present invention, a switch is provided. The switch comprises a switching backplane and a plurality of packet switching controllers. One or more packet switching controllers comprise a buffer for receiving and storing an inbound packet, a first engine for constructing an edit program real-time using a disposition decision for the inbound packet, and a second engine for executing the edit program to modify the inbound packet into an outbound packet. The packet switching controller that modifies the inbound packet transmits the outbound packet over the switching backplane to one or more of other packet switching controllers.

In further embodiment of the present invention, a switch is provided. The switch comprises a switching backplane and a plurality of packet switching controllers. One or more packet switching controllers comprise means for receiving and storing an inbound packet, means for constructing an edit program real-time using a disposition decision for the inbound packet, and means for executing the edit program to modify the inbound packet into an outbound packet. The packet switching controller that modifies the inbound packet transmits the outbound packet over the switching backplane to one or more of other packet switching controllers.

### BRIEF DESCRIPTION OF THE DRAWINGS

These and other aspects of the invention may be understood by reference to the following detailed description, taken in conjunction with the accompanying drawings, which are briefly described below.
FIG. 1 illustrates a network environment including a packet switching node in which one embodiment of the present invention is used;
FIG. 2 is a block diagram of a switching interface in one embodiment of the present invention;
FIG. 3 is a block diagram of a programmable packet switching controller in one embodiment of the present invention;
FIG. 4 is a block diagram of a programmable packet switching controller in another embodiment of the present invention;
FIG. 5 is a block diagram illustrating a process of creating and executing edit programs in one embodiment of the present invention; and
FIG. 6 is a flow diagram illustrating creation and execution of edit programs in one embodiment of the present invention.

### DETAILED DESCRIPTION

### I. Overview

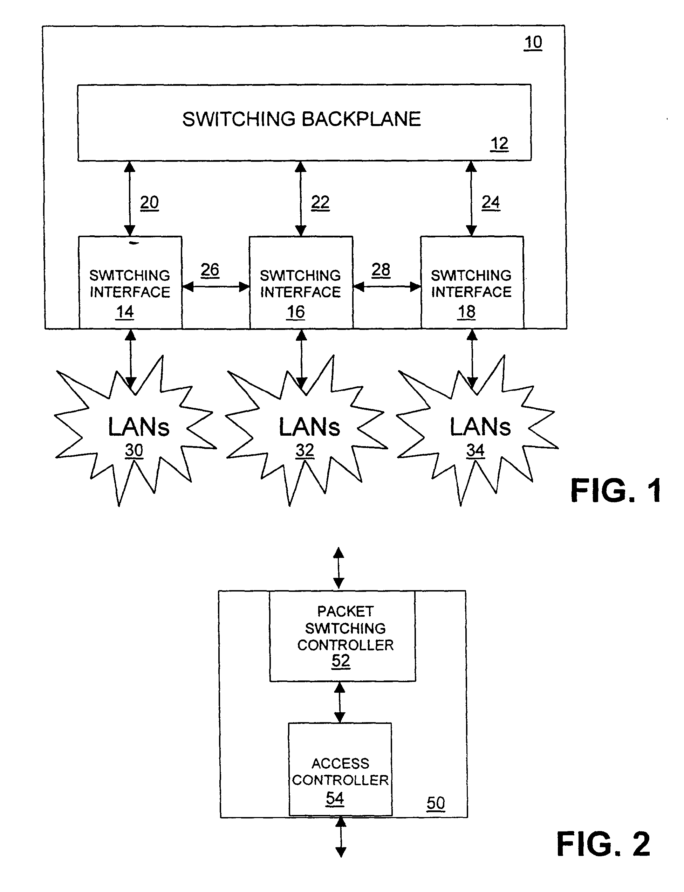

In FIG. 1, network environment including a packet switching node 10 is illustrated. The packet switching node may also be referred to as a switch, a data communication node or a data communication switch. The packet switching node 10 includes switching interfaces 14, 16 and 18 interconnected to respective groups of LANs 30, 32, 34, and interconnected to one another over data paths 20, 22, 24 via switching backplane 12. The switching backplane 12 preferably includes switching fabric. The switching interfaces may also be coupled to one another over control paths 26 and 28.

The switching interfaces 14, 16, 18 preferably forward packets to and from their respective groups of LANs 30, 32, 34 in accordance with one or more operative communication protocols, such as, for example, media access control (MAC) bridging and Internet Protocol (IP) routing. The switching node 10 is shown for illustrative purposes only. In practice, packet switching nodes may include more or less than three switching interfaces.

FIG. 2 is a block diagram of a switching interface 50 in one embodiment of the present invention. The switching interface 50 may be similar, for example, to the switching interfaces 14, 16, 18 of FIG. 1. The switching interface 50 includes an access controller 54 coupled between LANs and a packet switching controller 52. The access controller 54, which may, for example, include a media access controller (MAC), preferably receives inbound packets off LANs, performs flow-independent physical and MAC layer operations on the inbound packets and transmits the inbound packets to the packet switching controller 52 for flow-dependent processing. The access controller 54 preferably also receives outbound packets from the packet switching controller 52 and transmits the packets on LANs. The access controller 54 may also perform physical and MAC layer operations on the outbound packets prior to transmitting them on LANs.

The packet switching controller 52 preferably is programmable for handling packets having wide variety of communications protocols. The packet switching controller 52 preferably receives inbound packets, classifies the packets, modifies the packets in accordance with flow information and transmits the modified packets on switching backplane, such as the switching backplane 12 of FIG. 1. The packet switching controller 52 preferably also receives packets modified by other packet switching controllers via the switching backplane and transmits them to the access controller 54 for forwarding on LANs. The packet switching controller 52 may also subject selected ones of the packets to egress processing prior to transmitting them to the access controller 54 for forwarding on LANs.

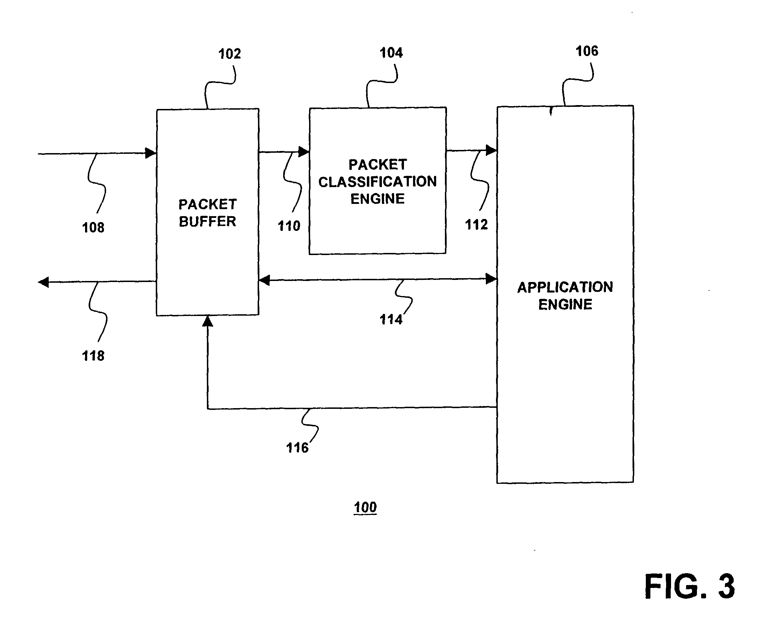

FIG. 3 is a block diagram of a programmable packet switching controller 100 in one embodiment of the present invention. The programmable packet switching controller 100, for example, may be similar to the packet switching controller 52 of FIG. 2. The programmable packet switching controller 100 preferably has flow resolution logic for classifying and routing incoming flows of packets. Packet switching controllers in other embodiments may include more or less components. For example, a packet switching controller in another embodiment may include a pattern match module for comparing packet portions against a predetermined pattern to look for a match. Further, packet switching controllers in still other embodiments may include other components, such as, for example, a policing engine, in addition to or instead of the components included in the programmable packet switching controller 100.

Due to its programmable nature, the programmable packet switching controller preferably provides flexibility in handling many different protocols and/or field upgradeability. The programmable packet switching controller may also be referred to as a packet switching controller, a switching controller, a programmable packet processor, a network processor, a communications processor or as another designation commonly used by those skilled in the art.

The programmable packet switching controller 100 includes a packet buffer 102, a packet classification engine 104, and an application engine 106. The programmable packet switching controller 100 preferably receives inbound packets 108. The packets may include, but are not limited to, Ethernet frames, ATM cells, TCP/IP and/or UDP/IP packets, and may also include other Layer 2 (Data Link/MAC Layer), Layer 3 (Network Layer) or Layer 4 (Transport Layer) data units. For example, the packet buffer 102 may receive inbound packets from one or more Media Access Control (MAC) Layer interfaces over the Ethernet.

The received packets preferably are stored in the packet buffer 102. The packet buffer 102 may include a packet FIFO for receiving and temporarily storing the packets. The packet buffer 102 preferably provides the stored packets or portions thereof to the packet classification engine 104 and the application engine 106 for processing.

The packet buffer 102 may also include an edit module for editing the packets prior to forwarding them out of the switching controller as outbound packets 118. The edit module may include an edit program construction engine for creating edit programs real-time and/or an edit engine for modifying the packets. The application engine 106 preferably provides application data 116, which may include a disposition decision for the packet, to the packet buffer 102, and the edit program construction engine preferably uses the application data to create the edit programs. The outbound packets 118 may be transmitted over a switching fabric interface to communication networks, such as, for example, the Ethernet.

The packet buffer 102 may also include either or both a header data extractor and a header data cache. The header data extractor preferably is used to extract one or more fields from the packets, and to store the extracted fields in the header data cache as extracted header data. The extracted header data may include, but are not limited to, some or all of the packet header. In an Ethernet system, for example, the header data cache may also store first N bytes of each frame.

The extracted header data preferably is provided in an output signal 110 to the packet classification engine 104 for processing. The application engine may also request and receive the extracted header data over an interface 114. The extracted header data may include, but are not limited to, one or more of Layer 2 MAC addresses, 802.1P/Q tag status, Layer 2 encapsulation type, Layer 3 protocol type, Layer 3 addresses, ToS (type of service) values and Layer 4 port numbers. In other embodiments, the output signal 110 may include the whole inbound packet, instead of or in addition to the extracted header data. In still other embodiments, the packet classification engine 104 may be used to edit the extracted header data to be placed in a format suitable for use by the application engine, and/or to load data into the header data cache.

The packet classification engine 104 preferably includes a programmable microcode-driven embedded processing engine. The packet classification engine 104 preferably is coupled to an instruction RAM (IRAM) (not shown). The packet classification engine preferably reads and executes instructions stored in the IRAM. In one embodiment, many of the instructions executed by the packet classification engine are conditional jumps. In this embodiment, the classification logic includes a decision tree with leaves at the end points that preferably indicate different types of packet classifications. Further, branches of the decision tree preferably are selected based on comparisons between the conditions of the instructions and the header fields stored in the header data cache. In other embodiments, the classification logic may not be based on a decision tree.

In one embodiment of the present invention, the application engine 106 preferably has a pipelined architecture wherein multiple programmable sub-engines are pipelined in series. Each programmable sub-engine preferably performs an action on the packet, and preferably forwards the packet to the next programmable sub-engine in a "bucket brigade" fashion. The packet classification engine preferably starts the pipelined packet processing by starting the first programmable sub-engine in the application engine using a start signal 112. The start signal 112 may include identification of one or more programs to be executed in the application engine 106. The start signal 112 may also include packet classification information. The programmable sub-engines in the application engine preferably have direct access to the header data and the extracted fields stored in the header data cache over the interface 114.

The application engine may include other processing stages not performed by the programmable sub-engines, however, the decision-making stages preferably are performed by the programmable sub-engines to increase flexibility. In other embodiments, the application engine may include other processing architectures.

### II. Real-Time Edit Program Construction Engine

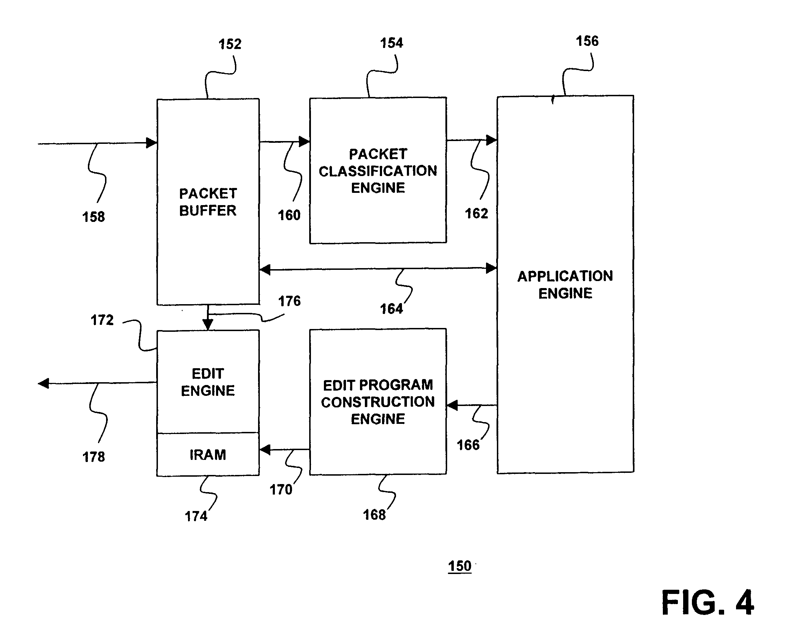

FIG. 4 is a block diagram of a programmable packet switching controller 150. Similar to the programmable packet switching controller 100 of FIG. 3, the programmable packet switching controller 150 includes a packet buffer 152, a packet classification engine 154 and an application engine 156. In addition, the programmable packet switching controller 150 includes an edit engine 172, an instruction RAM (IRAM) 174 and an edit program construction engine 168. In the programmable packet switching controller 100 of FIG. 3, an IRAM, an edit engine and an edit program construction engine may be included in the packet buffer 102.

Referring back to FIG. 4, the application engine 156 preferably provides an output signal 166 to the edit program construct engine 168. The output signal 166 preferably includes application data (or a disposition decision), which may include, but is not limited to, one or more of accounting data, routing data and policing data. The output signal 166 preferably also includes packet header data.

The edit program construction engine 168 preferably uses the packet header data and the application data to generate an edit program that has been tailored to the packet being processed. The edit program preferably contains a number of instructions to be executed by the edit engine 172. The instructions in the edit program may be used to perform operations including, but are not limited to, one or more of RECORD, PLAYBACK, COPY, DELETE, INSERT and OVERWRITE operations or their equivalents. Prior to being executed, the edit programs 170 preferably are provided to and stored in the IRAM 174 associated with the edit engine 172. In other embodiments, the IRAM may be included in the edit engine 172.

The edit engine 172 preferably executes the instructions stored in the IRAM 174 to modify an inbound packet 176 from the packet buffer 152 to provide as an outbound packet 178. The edit program preferably has been customized by the edit program construction engine for that particular inbound packet. The process of creating the edit program based on disposition decision for a particular packet and executing the edit program to modify that particular packet preferably continues for the flows of inbound packets that the programmable packet switching controller receives.

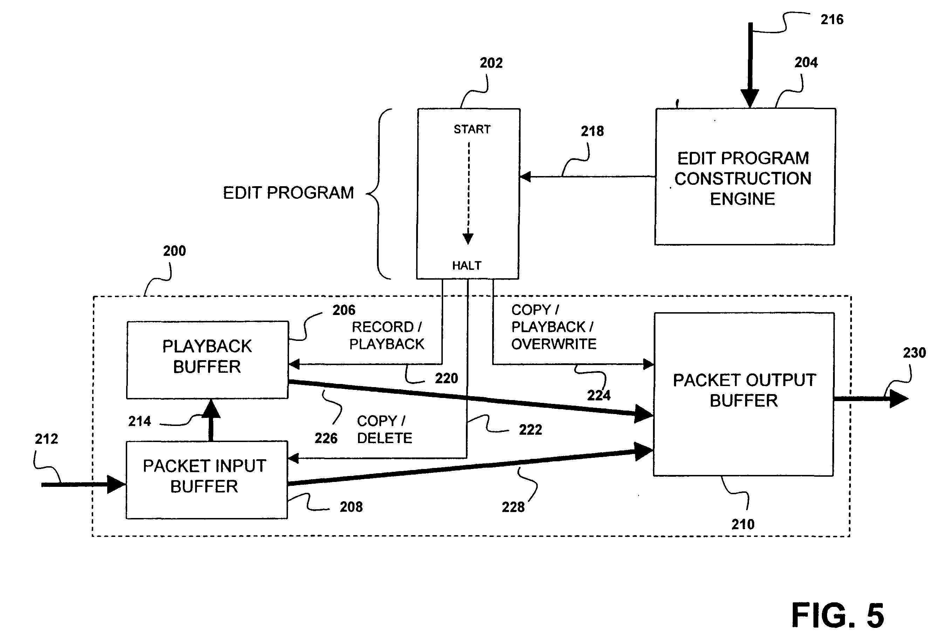

FIG. 5 is a block diagram illustrating a process of constructing and executing edit programs in one embodiment of the present invention. An edit program construction engine 204 preferably is used to create edit programs for inbound packets. The edit programs preferably are stored in an IRAM 202, and preferably are executed by an edit engine 200. The edit engine 200, the IRAM 202 and the edit program construction engine 204 may be included in a packet buffer, such as, for example, the packet buffer 102 of the programmable packet switching controller 100 in FIG. 3. The edit engine 200, the IRAM 202 and the edit program construction engine 204 may alternatively be included in a programmable packet switching controller, such as, for example, the programmable packet switching controller 150 of FIG. 4, separate and apart from a packet buffer.

The edit program construction engine 204 preferably receives packet data and application data 216 from an application engine, such as, for example, the application engine 156 of FIG. 4. The packet data may include packet header data. The packet header data may include, but are not limited to, one or more of Layer 2 MAC addresses, 802.1P/Q tag status, Layer 2 encapsulation type, Layer 3 protocol type, Layer 3 addresses, ToS (type of service) values and Layer 4 port numbers. The application data may include a disposition decision for a packet, and may contain, but are not limited to, one or more of accounting data, routing data and policing data.

The edit program construction engine 204 preferably uses the application data and the packet data to create edit programs 218. The edit programs preferably are tailored to the packets to be edited. The edit programs preferably are stored in the IRAM 202. The edit programs preferably include a number of instructions to be executed, and preferably have a starting location and an ending (or halting) location.

The edit engine 200 preferably includes a playback buffer 206, a packet input buffer 208 and a packet output buffer 210. In other embodiments, however, one or more of the playback buffer, the packet input buffer and the packet output buffer may be implemented outside of the edit engine. The packet input buffer 208 preferably receives inbound packets 212 from, for example, a packet FIFO within the packet buffer, and provide them to the playback buffer 206 and the packet output buffer 210 as needed. In other embodiments, the packet input buffer 212 may not be used, and instead, the playback buffer 206 and the packet output buffer 210 may receive the inbound packets directly from the packet FIFO.

The inbound packet may be stored in the packet FIFO (inside the packet buffer) and/or the packet input buffer 208 until such time when an edit program has been created to modify that inbound packet. In other embodiments, the inbound packet may be stored in other buffers. The edit program preferably includes a number of instructions for performing one or more of the following operations: RECORD, PLAYBACK, COPY, DELETE, INSERT and OVERWRITE, or their equivalents. The edit program may also include other instructions to perform other operations.

The playback buffer 206 preferably receives instructions 220 to perform a RECORD operation. During the RECORD operation, the playback buffer preferably stores data, such as, for example, the header data, from the current inbound packet 214. The RECORD operation preferably is performed for IP fragmentation where the inbound packet's IP header preferably is recorded and then played back multiple times to construct each fragment. For the PLAYBACK operation, the instructions 220 preferably are provided to the playback buffer to read the IP header and instructions 224 preferably are provided to the packet output buffer 210 to write the IP header. In other embodiments, the playback buffer may store one or more inbound packets to be played back.

The inbound packets stored in the packet input buffer 208 may be discarded by providing instructions 222 to the packet input buffer to perform a DELETE operation. For editing purposes, the inbound packets may be copied from the packet input buffer to the packet output buffer during a COPY operation. For the COPY operation, instructions 222 preferably are provided to the packet input buffer to read the inbound packets 228, and instructions 224 preferably are provided to the packet output buffer 210 to write the inbound packets 228.

Editing of the inbound packets preferably are performed in the packet output buffer during OVERWRITE operations. The packet output buffer 210 preferably receives instructions 224 to perform the OVERWRITE operations. During the OVERWRITE operations, one or more bits of the inbound packets preferably are overwritten with other bits so as to modify the inbound packets into outbound packets. The edit programs preferably include one or more instructions that determine the bits to be overwritten in the inbound packets. The edit programs preferably also include one or more instructions that determine the data to be used to overwrite these bits. The overwritten bits preferably are in the packet header. The packet output buffer preferably transmits the modified inbound packets as outbound packets 230.

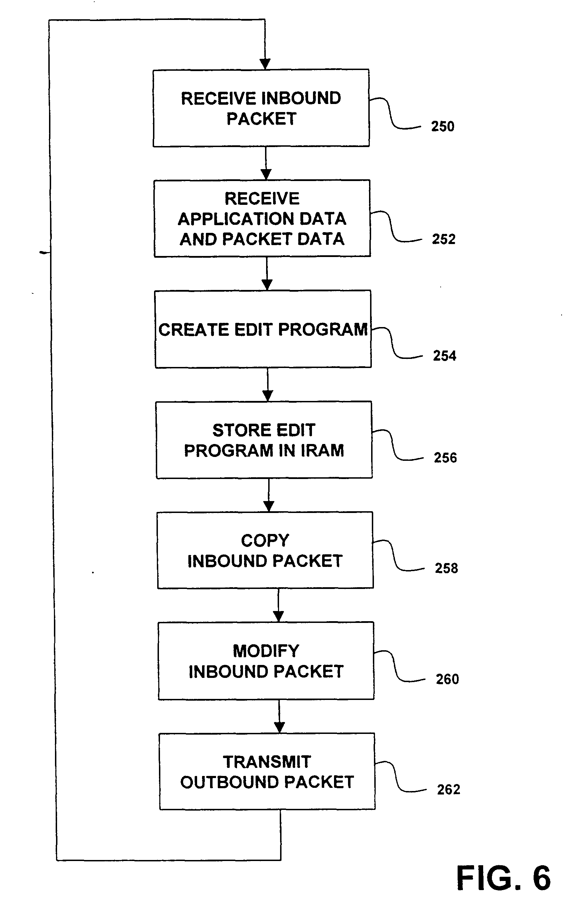

FIG. 6 is a flow diagram illustrating creation and execution of edit programs in one embodiment of the present invention. In step 250, a packet input buffer, such as, for example, the packet input buffer 208 of FIG. 5 preferably receives an inbound packet. The inbound packet preferably remains in the packet input buffer until an edit program is created to modify it.

In step 252, an edit program construction engine, such as, for example, the edit program construction engine 204 of FIG. 5, preferably receives application data and packet data of the inbound packet. The application data may include a disposition decision, and may contain, but are not limited to, one or more of accounting data, routing data and policing data. The packet data may include, but are not limited to, packet header data.

In step 254, the edit program construction engine preferably creates an edit program using the application data and the packet data. The edit program may include instructions for performing, but is not limited to, one or more of RECORD, PLAYBACK, COPY, DELETE, INSERT and OVERWRITE operations. In step 256, the created edit program preferably is stored in an IRAM, such as, for example, the IRAM 202 of FIG. 5.

In step 258, the inbound packet preferably is copied to a packet output buffer, such as, for example, the packet output buffer 210 of FIG. 5, during a COPY operation. In step 260, the inbound packet preferably is modified into an outbound packet using INSERT, OVERWRITE, DELETE or other operations.

For example, for basic IP routing, the MAC source address of the packet, e.g., frame, preferably is replaced through packet modification with the MAC address of the router. The IP TTL (time-to-live) field in the IP header preferably is decremented to indicate that the IP packet has traversed a hop, and the IP header checksum is preferably updated to reflect the changed IP header. In addition, Quality of Service (QoS) actions may modify the ToS/Precedence field, which may also be referred to as the Differentiated Services Codepoint field, in the IP header to reflect the QoS handling of the packet.

In other exemplary uses, such as Network Address Translation, the IP source or destination addresses may be rewritten, as may the TCP source or destination port number as well as fields in the TCP header, such as, for example, the Sequence Number or Acknowledge Number. Changes to IP addresses typically also affect the TCP header checksum, which may also be changed. The edit logic in the edit engine preferably is notified by special commands that edited data affects the IP and/or TCP header checksums, and when the checksums appear in the data stream, the edit checksum logic preferably fixes, i.e., corrects, the checksums appropriately. The edit checksum logic preferably is implemented using hardware, but it may also be implemented using software.

In step 262, the outbound packet preferably is transmitted, for example, over a switching backplane, which includes switching fabric. A packet switching controller on the egress side (of the backplane) preferably receives the outbound packet. The packet switching controller on the egress side preferably provides the outbound packet to an access controller (MAC Layer interface) for transmission on the Ethernet.

Although this invention has been described in certain specific embodiments, many additional modifications and variations would be apparent to those skilled in the art. It is therefore to be understood that this invention may be practiced otherwise than as specifically described. Thus, the present embodiments of the invention should be considered in all respects as illustrative and not restrictive, the scope of the invention to be determined by the appended claims and their equivalents.

## Claims

1. An edit module comprising:
an edit program construction engine,
wherein the edit program construction engine creates an edit program for a packet in response to a disposition decision for the packet, and wherein the edit program is applied to modify the packet.

2. The edit module of claim 1 wherein the edit program includes a plurality of instructions, and wherein one or more instructions determine one or more data bits to be included in the modified packet.

3. A method of modifying an inbound packet to generate an outbound packet, the method comprising the steps of:
creating an edit program for the inbound packet in response to a disposition decision for the inbound packet; and
applying the edit program to the inbound packet to generate the outbound packet.

4. The method of modifying an inbound packet of claim 3 wherein the edit program includes a plurality of instructions, and wherein the step of applying the edit program comprises the step of determining one or more data bits to be included in the outbound packet.

5. A packet switching controller for processing an inbound packet, the packet switching controller comprising:
a first engine for constructing an edit program for the inbound packet in response to a disposition decision for the inbound packet;
a memory for storing the edit program; and
a second engine for executing the edit program to modify the inbound packet to generate an outbound packet.

6. The packet switching controller of claim 5 wherein the edit program includes a plurality of instructions, and one or more instructions determine a plurality of data bits to be included in the outbound packet.

7. The packet switching controller of claim 5 wherein the edit program includes a plurality of instructions, and one or more instructions are for performing at least one operation selected from the group consisting of RECORD, PLAYBACK, COPY, DELETE, INSERT and OVERWRITE operations.

8. The packet switching controller of claim 5 wherein the edit program includes a plurality of instructions that are executed serially.

9. The packet switching controller of claim 5 wherein the second engine includes a packet input buffer for receiving and for temporarily storing the inbound packet.

10. The packet switching controller of claim 9 wherein the inbound packet is stored in the packet input buffer until the edit program has been constructed for the inbound packet.

11. The packet switching controller of claim 5 wherein the second engine includes a playback buffer for storing data from the inbound packet and for playing back at least a portion of the stored data.

12. The packet switching controller of claim 5 wherein the second engine includes a packet output buffer, which is used to modify one or more bits of the inbound packet to generate the outbound packet, and to transmit the outbound packet.

13. A method of processing an inbound packet to generate an outbound packet using a real-time constructed edit program, the method comprising the steps of:
constructing the edit program for the inbound packet in response to a disposition decision for the inbound packet;
storing the edit program in a memory;
modifying the inbound packet by executing the edit program to generate the outbound packet.

14. The method of processing an inbound packet of claim 13 wherein the step of modifying the inbound packet includes the step of determining a plurality of data bits to be included in the outbound packet.

15. The method of processing an inbound packet of claim 13 wherein the step of modifying the inbound packet includes the step of performing at least one operation selected from the group consisting of RECORD, PLAYBACK, COPY, DELETE, INSERT and OVERWRITE operations.

16. The method of processing an inbound packet of claim 13 wherein the step of modifying the inbound packet includes the step of serially executing a plurality of instructions.

17. The method of processing an inbound packet of claim 13 further comprising the steps of receiving the inbound packet and temporarily storing the inbound packet.

18. The method of processing an inbound packet of claim 17 wherein the inbound packet is stored until the edit program has been constructed for the inbound packet.

19. The method of processing an inbound packet of claim 13 further comprising the steps of storing data from the inbound packet and playing back at least a portion of the stored data.

20. The method of processing an inbound packet of claim 13 wherein the step of modifying the inbound packet includes the step of modifying one or more bits of the inbound packet.

21. A switch comprising a switching backplane and a plurality of packet switching controllers, one or more packet switching controllers comprising:
a buffer for receiving and storing an inbound packet;
a first engine for constructing an edit program real-time using a disposition decision for the inbound packet; and
a second engine for executing the edit program to modify the inbound packet into an outbound packet,
wherein the packet switching controller that modifies the inbound packet transmits the outbound packet over the switching backplane to one or more of other packet switching controllers.

22. A switch comprising a switching backplane and a plurality of packet switching controllers, one or more packet switching controllers comprising:
means for receiving and storing an inbound packet;
means for constructing an edit program real-time using a disposition decision for the inbound packet; and
means for executing the edit program to modify the inbound packet,
wherein the packet switching controller that modifies the inbound packet transmits the outbound packet over the switching backplane to one or more of other packet switching controllers.
